# NEUE EUROPÄISCHE PATENTSCHRIFT

(11) **EP 1 719 742 B2**
(45) Veröffentlichungstag und Bekanntmachung des Hinweises auf die Entscheidung über den Einspruch: **07.03.2012**
(45) Hinweis auf die Patenterteilung: 09.12.2009
(21) Anmeldenummer: 05016437.5
(22) Anmeldetag: 28.07.2005
(51) Int. Cl.: C04B 22/06, C04B 28/02

(54) **Hydraulisches Bindemittel**
Hydraulic binder
Liant hydraulique

(30) Priorität: 19.04.2005 DE 102005018100
(43) Veröffentlichungstag der Anmeldung: 08.11.2006
(60) Teilanmeldung: 09011002.4
(73) Patentinhaber: SCHWENK Zement KG, 89077 Ulm (DE)
(72) Erfinder: Ludwig, Horst-Michael, Dr., 97753 Karlstadt (DE); Neumann, Thomas, 97753 Karlstadt - Karlburg (DE)
(74) Vertreter: Leinweber & Zimmermann

(56) Entgegenhaltungen:
- WO-A-2005/037730
- JP-A- 2003 277 111
- PATENT ABSTRACTS OF JAPAN Bd. 2003, Nr. 12, 5. Dezember 2003 (2003-12-05) & JP 2005 047735 A (KUROSAKI HARIMA CORP), 24. Februar 2005 (2005-02-24)
- PATENT ABSTRACTS OF JAPAN Bd. 2000, Nr. 21, 3. August 2001 (2001-08-03) & JP 2001 114542 A (KUROSAKI HARIMA CORP), 24. April 2001 (2001-04-24)
- PATENT ABSTRACTS OF JAPAN Bd. 2003, Nr. 12, 5. Dezember 2003 (2003-12-05) & JP 2003 246657 A (DENKI KAGAKU KOGYO KK), 2. September 2003 (2003-09-02)
- OATES J.A.H.: 'Lime and Limestone-Chemistry and Technology, production and Uses', 1988, ED. WILEY VCH Artikel 'Extrait de l'ouvrage'
- BOYNTON S.R.S.: 'Chemistry and Technology of Lime and Limestone, 2ÈME. EDITION', 1980, ED. WILEY & SONS Artikel 'Extrait de l'ouvrage'
- 'Copie de la norme NF-EN459', 01 Oktober 2002
- 'Copie de la norme NBN-EN 413', 01 Mai 2004

## Beschreibung

Die vorliegende Erfindung betrifft hydraulische Bindemittel mit einer nach Wasserzugabe fließ- und erstarrungsfähigen Bindemittelkomponente und einer zum Beschleunigen des Erhärtens dienenden Beschleunigerkomponente, unter Verwendung derartiger Bindemittel hergestellte Betonbauteile, Verfahren zur Herstellung solcher Betonbauteile und die Verwendung eines solchen Bindemittels zur Herstellung von Mörtel oder Beton.

Seit langem bekannt ist der Bedarf nach einem schnell-erhärtenden hydraulischen Bindemittel zur Betonherstellung. Bisher wurde dieser Bedarf entweder durch besondere Schnellzemente an sich oder durch Schnellzemente auf der Basis von Mischzementen mit Zusätzen gedeckt. Viele dieser Produkte finden heute im Bereich Instandsetzung, Tiefbau oder im Bereich Innenausbau wie z.B. in Putz-, Mörtel- oder Estrichsystemen Anwendung.

Bei den besonderen Schnellzementen an sich kann in Zemente unterschieden werden, die auf Basis eines modifizierten Portlandzementes hergestellt werden und in Spezialzemente, deren Klinkerbasis deutlich vom Portlandzement abweicht.

Für den Bereich der Schnellerhärtung können modifizierte Portlandzemente aus speziell für diesen Einsatzfall gebrannten Portlandzementklinkern hergestellt werden. Im Gegensatz zu normalen Portlandzementklinkem zeichnen sich diese Klinker durch hohe Kalkstandards, im Allgemeinen > 100 und hohe Silicatmoduli, im Allgemeinen > 3, aus. In Folge dessen ist der Gehalt an Tricalciumsilicat (C₃S), welches im Wesentlichen für die frühe Festigkeitsentwicklung des Zementes verantwortlich ist, gegenüber normalen Portlandzementen deutlich erhöht. Die aus diesen Klinkern hergestellten Zemente erzielen im Vergleich zu normalen Portlandzementen eine bis zu 20% höhere Frühfestigkeit.

Zur Gruppe der modifizierten Portlandzemente gehören auch Zemente, die kein oder nur sehr wenig Sulfatträger (im Allg. Calciumsulfat) als Erstarrungsregler enthalten. Ggf. ist bei den entsprechenden Klinkern auch der C₃A-Gehalt erhöht. Diese Zemente bewirken im Beton oder Mörtel ein schnelles Erstarren und werden deshalb vorwiegend für den Spritzbetonbereich verwendet. Oft werden den Zementen alkalifreie Beschleuniger, wie Aluminiumsulfat oder Aluminiumhydroxid oder alkalihaltige Beschleuniger auf der Basis von Alkalihydroxiden, Alkaliwassergläsern oder anderen Alkalisalzen zugesetzt, um die Grünstandsfestigkeit zu erhöhen. Da diese Zemente im Wesentlichen nur den Erstarrungsvorgang, aber nicht die eigentliche Festigkeitsentwicklung beschleunigen, sind sie der Gruppe der Schnellzemente nur bedingt zuzurechnen.

Spezialzemente zur Beschleunigung der Erhärtung unterscheiden sich von Portlandzementen durch die andere Zusammensetzung des zugrundeliegenden Klinkers. Typische Vertreter für diese Gruppe von Zementen sind Tonerdezemente, Sulfoaluminatzemente und Regulated Set Cements.

Tonerdezement bzw. Tonerdeschmelzzement wird oft auch als Calciumaluminatzement bezeichnet. Die festigkeitsbestimmenden Klinkerphasen sind Monocalciumaluminat (CA), Calciumdialuminat (CA₂) und Mayenit (C₁₂A₇). Die ebenfalls enthaltenen silicatischen Klinkerphasen (C₂S und C₂AS) liefern nur einen unwesentlichen Festigkeitsbeitrag. Tonerdezemente können auch bei tiefen Temperaturen innerhalb kürzester Zeit extrem hohe Druckfestigkeiten erreichen. Druckfestigkeiten von bis zu 60 N/mm² nach 24 Stunden sind mit diesen Zementen zielsicher zu erreichen. Verantwortlich für diese hohe Frühfestigkeit sind die beiden sich bildenden Hydratphasen CAH₁₀ und C₂AH₈. Diese Hydratphasen setzen sich, begünstigt durch Feuchtigkeit und Temperaturen > 23 °C, im Laufe der Zeit zum thermisch stabilen C₃AH₆ um. Die Umwandlung ist mit einer starken Porositätserhöhung und Wasserfreisetzung verbunden und ist Ursache für einen starken Abfall der Festigkeit. Tonerdezemente dürfen vor diesem Hintergrund für Bauwerke des konstruktiven Ingenieurbaus nach EN 206-1:2001-07 bzw. DIN 1045-2:2001-07 nicht eingesetzt werden.

Einsatzbereiche finden Tonerdezemente insbesondere in Feuerfestmaterialien, als Bohrlochzement und im Bereich der Bauchemie.

Calciumsulfoaluminatzemente oder auch Calciumaluminatsulfatzemente enthalten als Hauptklinkerphasen Calciumaluminatsulfat C₄A₃s, Dicalciumsilicat (C₂S) und Calciumaluminatferrit (C₂(A,F)). Je nach Rohmehlzusammensetzung können größere Mengen Magnesium, Fluorid oder Eisen in den Klinkerphasen eingebaut sein. Bei der frühen Hydratation bilden sich große Mengen Ettringit und Monosulfat, die zu einer erheblichen Frühfestigkeit (z.t. bis zu 30 N/mm² nach 3 Stunden) führen. Aufgrund der bei der Hydratation stattfindenden Volumenexpansion werden diese Zemente häufig als Schwindkompensierer z.b. in Estrichen eingesetzt. Bauteile aus diesem Zement neigen zu einer schnellen Carbonatisierung, die mit einem erheblichen Festigkeitsverlust einhergeht. Anders als bei der Verwendung von Portlandzement wird der Bewehrungsstahl oder Spannstahl in Bauteilen, die mit diesem Zement hergestellt wurden, nicht vor Korrosion geschützt. Im Allg. werden diese Zemente ausschließlich in Abmischungen mit anderen Zementen verwendet.

Regulated Set Cement oder auch Jet Cement oder Calciumaluminatfluoridzement enthält neben der Hauptklinkerphase C₃S vor allem die fluoroaluminathaltige Phase C₁₁A₇•CaF₂ und Gips. Meist enthalten diese Zemente auch noch eine Kalkkomponente. Das Fluoroaluminat bildet bei der Hydratation große Mengen Ettringit und ist für die hohe Frühfestigkeit von bis zu 16 N/mm² nach einer Stunde verantwortlich. Um ein zu schnelles Erstarren des Betons oder Mörtels zu verhindern, werden häufig Erstarrungsverzögerer zugesetzt. Im Markt konnte sich dieser Zement lediglich in Nischenprodukten behaupten. Bauteile, die mit diesem Zement hergestellt wurden, wiesen im Außenbereich eine mangelhafte Dauerhaftigkeit auf.

Neben den genannten Spezialzementen existieren teilweise auch frühhochfeste Zemente auf der Basis von Alinit (C₁₁A₇•CaCl₂). Diese Zemente besitzen allerdings, aufgrund ihrer gegenüber Bewehrungsstahl korrosionsfördernden Wirkung, kaum eine praktische Bedeutung.

In den meisten Fällen werden schnellerhärtende hydraulische Bindemittel als Mischzemente mit verschiedenen Zusätzen hergestellt. Die Basis für diese Systeme stellt immer ein Portlandzement oder Portlandzementklinker dar.

Der überwiegende Teil dieser Mischzemente enthält Zusätze, die die aluminatischen und/oder aluminat-ferritischen Klinkerphasen anregen und somit eine Ettringit-, Monosulfat- oder auch Calciumaluminathydratbildung beschleunigen. Durch die Zugabe von löslichen Aluminiumverbindungen (z.B. Aluminiumsulfat, Aluminiumhydroxid) oder einer Tonerdezementkomponente kann der Anteil festigkeitsbildender Hydratphasen weiter erhöht werden.

Zur Erhärtungsbeschleunigung werden oft Alkalicarbonate, Fruchtsäuren oder Sulfonate eingesetzt. Zur Aussteuerung der Verarbeitungseigenschaften und des Festigkeitsverlaufes werden darüber hinaus verschiedene Zusatzstoffe (z.B. Flugaschen, Microsilica, Metakaolin) und/ oder Zusatzmittel (Verflüssiger, Phosphatverzögerer o.ä.) zugegeben:
Im folgenden werden einige Beispiele von patentierten Mischzementen auf Portlandzementbasis dargestellt.

In der EP 0517869 B1 wird ein System basierend auf Portlandzement beschrieben. Um hohe Festigkeiten generieren zu können sollte der Anteil an C₄AF größer als 9,5% sein. Dem System wird ein Carbonatdonor als K₂CO₃, -bicarbonat oder -trihydrat zugesetzt sowie Tricalciumcitratmonohydrat (ggf. in Abmischung mit Dikaliumoxalatmonohydrat). Mit dem System können Festigkeiten von bis zu 20 N/mm² nach 4 Stunden erreicht werden.

Die DE 4223494 C2 beschreibt ein System aus Portlandzement mit einem geringen Anteil Tonerdezement und Zusätzen von Natriumcarbonat, Natriumsulfat, Calciumhydroxid, Lithiumcarbonat, Kann-Tartat und Ca-Ligninsulfonat. Es werden Festigkeiten bis zu 7 N/mm² nach einer Stunde erreicht.

In der DE 4313148 wird ein beschleunigtes System beschrieben, dass aus Portlandzement, Microsilica oder Metakaolin, Natriumcitrat und Lignin- oder Naphthalinsulfonat besteht. Es werden nach einer Stunde bis zu 4 N/mm² erreicht.

Die DE 10141864A1 beschreibt eine Schnellzement-Bindemittelmischung, die aus Portlandzementklinkerfeinstmehl, Gluconsäure bzw. Gluconat, Tonerderdeschmelzzement und ggf. weiteren Additiven besteht. Die erreichbare Festigkeit kann über 20 N/mm² nach 4 Stunden betragen.

Die Beschleunigung der Systeme über die verstärkte Bildung von Calciumaluminathydrat, Ettringit und/ oder Monosulfat bedingt eine in Teilbereichen reduzierte Dauerhaftigkeit entsprechender Betone. Weiterhin können derartige Bindemittel aufgrund der durch Alkalicarbonate und/ oder Hydroxycarbonsäuren hervorgerufenen Eisenkomplexierung zu unerwünschten Braunverfärbungen auf der Betonoberfläche führen. Nicht zuletzt führen eine Reihe der zur Aussteuerung der Systeme verwendeten Stoffe zu einer erhöhten hygroskopischen Feuchteaufnahme des Zementes und setzen somit seine Lagerfähigkeit herab. Im konstruktiven Betonbau konnten sich diese Produkte deshalb nicht durchsetzten. Sie finden jedoch Anwendung im Reparatur- und Instandsetzungsbereich, im Bereich der Putz- und Mörtelindustrie und im Bereich der Bauchemie.

Weit effektiver als eine Beschleunigung der aluminatischen und/ oder aluminat-ferritischen Reaktion, die zu Hydratphasen mit nur begrenztem Festigkeitspotential führt, ist die beschleunigte Bildung der für die Festigkeitsentwicklung entscheidenden C-S-H - Phasen.

Die Beschleunigung der C-S-H - Phasen - Bildung kann im Mischzement durch den Einsatz von Salzen realisiert werden, die das Löslichkeitsprodukt in bezug auf Calcium erhöhen. Dazu zählen Halogenide, Pseudohälogenide, Nitrate, Nitride und Formiate. Die jeweiligen Calciumsalze und Salze mit anderen mehrwertigen Kationen sind hinsichtlich Beschleunigung besonders geeignet. Alkali-Kationen senken das Löslichkeitsprodukt in bezug auf Calcium und stehen der beschleunigten C-S-H - Phasen - Bildung entgegen.

Von den oben genannten wirken sich die Halogenide am stärksten auf die C-S-H Phasen-Bildung aus. Aufgrund der guten Verfügbarkeit und der geringen Kosten wurde in der Vergangenheit oft Calciumchlorid zur Beschleunigung der Zementhydratation verwendet. Es zeigte sich jedoch, dass die Chloride und die anderen Halogenide maßgeblich die Korrosion von Spann- und Bewehrungsstählen fördern. Aus diesem Grund dürfen diese Stoffe für konstruktiven Stahl- und Spannbeton insbesondere nach EN 206-1:2007-07 nicht verwendet werden. Zusätzlich führen diese Beschleuniger zu deutlich niedrigeren Endfestigkeiten und zu einer mangelhaften Dauerhaftigkeit der aus ihnen hergestellten Teile. Die beschleunigende Wirkung ist bei den Pseudohalogeniden, Nitraten, Nitriden und Formiaten weniger stark ausgeprägt. Jedoch können auch diese Salze die Korrosion der gespannten oder schlaffen Stähle im Beton fördern. Ihre Anwendung für Stahl- bzw. Spannbeton ist eingeschränkt und unterliegt im Bereich der CEN-Staaten den jeweiligen nationalen Vorschriften. So darf in Deutschland lediglich Formiat zur Erhärtungsbeschleunigung im Stahlbetonbau eingesetzt werden. Der Einsatz für Spannbeton ist untersagt.

Die Verwendung von Gips als Erhärtungsbeschleuniger ist aufgrund der Ettringitbildung im Hinblick auf die üblicherweise angestrebte Dauerhaftigkeit und Festigkeit des Betons unter Belastung problematisch.

Aus der DE 197 54 826 A1 ist weiterhin ein schnellhärtendes, zementäres, hydraulisches Bindemittel geringer Schwindung insbesondere für Putze und Estriche bekannt. Gemäß dieser Schrift soll das Ettringitproblem dadurch gelöst werden, dass durch eine gesonderte Zumischung einer reaktiven CaSO₄₋ - Verbindung, frühzeitig eine gezielte Ettringitbildung bewirkt wird und sich nach der Erhärtungsphase möglichst kein Sekundärettringit mehr bildet. Die Erstarrungseigenschaften dieses bekannten Bindemittels sind allerdings noch nicht zufriedenstellend.

Im Weiteren ist kein Schnellzement bekannt, der speziell was die Herstellung von Betonbauteilen, insbesondere Betonfertigteilen betrifft, den Abschluss eines kompletten Betoniervorgangs inklusive schnellem Entschalen und Belasten der Betonbauteile innerhalb einer Arbeitsschicht unter Normalbedingungen ermöglicht. Es mangelt also an einem hydraulischen Bindemittel, welches die bei der Betonherstellung erforderlichen Bedingungen risikofrei erfüllt und/oder die aus wirtschaftlichen Gründen gewünschten Eigenschaften des aus dem Bindemittel hergestellten Betons besitzt.

JP 2 005 047 735 A offenbart eine Beschleunigerzusammensetzung enthaltend Calciumhydroxid mit Teilchengrößen von < 15 µm.

WO 2005/037730 A offenbart einen Erhärtungsbeschleuniger für Zement auf der Basis von Calciumhydroxid, das eine Korngröße von 3 µm oder kleiner aufweist.

JP 2 001 114 542 A offenbart ebenfalls hydrierten Kalk mit Teilchengrößen im Mikrometerbereich.

Diese Erfindung macht es sich daher zur Aufgabe, ein hydraulisches Bindemittel zu entwickeln, mit dem eine möglichst hohe Frühfestigkeit des damit hergestellten Produkts erreichbar ist.

Diese Aufgabe wird nun erfindungsgemäß überraschend einfach gelöst durch ein hydraulisches Bindemittel wie es in Hauptanspruch 1 beschrieben und in den Folgeansprüchen 2 bis 20 spezifiziert wird. Das in der Beschleunigerkomponente erfindungsgemäßer hydraulischer Bindemittel enthaltene hochfeine Calciumhydroxid weist eine große Oberfläche auf, d. h. eine spezifische Oberfläche (BET-Oberfläche nach DIN 66132) von 25 m²/g oder mehr. Bevorzugt besteht es zu 40 Masse-% oder mehr, vorzugsweise 70 Masse-% oder mehr aus Teilchen einer Korngröße von 20 µm oder weniger. Aufgrund dieser sehr hohen spezifischen Oberfläche des Calciumhydroxids stehen den C-S-H-Phasen, deren Bildung für die Zementhydratation in entscheidender Weise festigkeitsbestimmend sind, erfindungsgemäß genügend Kristallisationskeime zur Verfügung. Daher kann die Bildung der C-S-H-Phase beschleunigt erfolgen und schnell eine hohe Frühfestigkeit des entsprechenden Betons erreicht werden.

Dies ist überraschend, da noch in der "Tagung Bauchemie", Erlangen, 2004, Seite 135-139, darauf hingewiesen wird, dass Calciumhydroxid nur einen geringen Einfluss auf die Keimbildung der festigkeitsbestimmenden C-S-H-Phasen hat.

Die Herstellung eines solchen hydraulischen Bindemittels ist erfindungsgemäß sehr einfach, da hochfeines Calciumhydroxid, welches üblicherweise als gelöschter Kalk zur Rauchgasreinigung verwendet wird, im Handel erhältlich ist. Der aus dem hydraulischen Bindemittel nach Anspruch 1 hergestellte Beton erfüllt dabei alle anwendungstechnischen Anforderungen bezüglich Verarbeitungszeit, Endfestigkeit und Dauerhaftigkeit. Insbesondere werden auch alle Anforderungen nach EN 206-1:2007-07 bzw. DIN 1045-2:2001-07 erfüllt.

Generell wird der Effekt des beschleunigten Erhärtens verstärkt, je größer die spezifische Oberfläche des Calciumhydroxids ist. In einer bevorzugten Ausführungsform dieser Erfindung soll das Calciumhydroxid eine spezifische Oberfläche von 30 m²/g oder mehr aufweisen, dabei allerdings 100 m²/g, vorzugsweise 75 m²/g, insbesondere 50 m²/g nicht übersteigen, damit die die Neigung zum Sintern bzw. zur Agglomeratbildung fördernde Zunahme der Oberflächenenergie der Teilchen begrenzt wird. In einer weiteren bevorzugten Ausführungsform soll das hochfeine Calciumhydroxid zu 40 Masse-% oder mehr aus Teilchen einer Korngröße von 1 bis 10 µm, vorzugsweise 3 bis 5 µm bestehen, und/oder 70 Masse-% oder mehr aus Teilchen einer Korngröße von 4 bis 16 µm, vorzugsweise 8 bis 12 µm bestehen.

In einer bevorzugten Ausführungsform ist vorgesehen, dass die Beschleunigerkomponente in einem Mengenanteil von, bezogen auf das hydraulische Bindemittel, 1 bis 15 Masse-%, vorzugsweise 3 bis 10 Masse-%, insbesondere 4 bis 6 Masse-% enthalten ist. Dieser Mengenanteil kann insbesondere problemlos reguliert und zweckmäßig je nach Anforderung gewählt werden.

In einer weiteren bevorzugten Ausführungsform soll die Beschleunigerkomponente aus praktischen Gründen (Lagerung) in trockener, pulvriger Form enthalten sein. Grundsätzlich lässt sich die Beschleunigerkomponente mit jeder nach Wasserzugabe fließ- und erstarrungsfähigen Bindemittelkomponente kombinieren, besonders bevorzugt sind jedoch Ausführungsformen, in denen die Bindemittelkomponente Portlandzement CEM I und/oder einen Kompositzement CEM II enthält und/oder vorzugsweise daraus besteht.

Auch eine stärkere Aufmahlung des Zements führt generell zu einer höheren Frühfestsigkeit. Allerdings führt der mit einer steigenden Mahlfeinheit des Zements notwenidgerweise einhergehende höhere Wassergehalt zu einem Absinken der Früh- und Endfestigkeit, der günstige Effekt der stärkeren Zementaufmahlung ist also eingeschränkt. In einer bevorzugten Ausführungsform soll diese Mahlfeinheit 3000 bis 7000 cm²/g (nach Blaine), vorzugsweise 4000 bis 6000 cm²/g betragen.

Die maßgebliche festigkeitsbildende Phase im Portlandzement bleibt - trotz der Beschleunigung der Alit bzw. das Tricalciumsilikat C₃S. Daher soll die Bindemittelkomponente in einer bevorzugten Ausführungsform einen C₃S-Anteil von 50 bis 75 Masse-%, vorzugsweise 55 bis 65 Masse-% (jeweils bezogen auf den Zementklinkeranteil) aufweisen.

In einer weiteren bevorzugten Ausführungsform wird aufgrund der hygroskopischen Eigenschaften einiger Alkaliverbindungen, welche die Lagerfähigkeit verringern können, ein Alkaligehalt, ausgedrückt als Natriumäquivalent, von 1,8 Masse-% oder weniger, vorzugsweise 1,2 Masse-% oder weniger im Bindemittel gewählt. Die Wahl der Bindemittelkomponente wird im Allgemeinen von den speziellen Anforderungen des entsprechenden Betons abhängen. In einer bevorzugten Ausführungsform soll es sich bei der Bindemittelkomponente um einen Zement der Fertigkeitsklässe 52,5 R handeln. Die Menge, in der das hydraulische Bindemittel die Bindemittelkomponente enthält, hängt von der Wahl der Konzentration der Beschleunigerkomponente und weiteren möglichen Zusätzen ab, in einer bevorzugten Ausführungsform soll der Anteil der Bindemittelkomponente (bezogen auf das hydraulische Bindemittel) 85 bis 99 Masse-%, vorzugsweise 90 bis 97 Masse-%, insbesondere 94 bis 96 Masse-% betragen.

Vom Schutzbereich dieser Erfindung sollen ausschließlich auch Bindemittel erfasst sein, bei denen eine oder mehrere seiner Bestandteile, insbesondere das hochfeine Calciumhydoxid mit einer Art Beschichtung versehen ist/sind (coating).

Weiter soll mit dieser Erfindung ausdrücklich auch ein Bindemittel vom Schutzbereich erfasst sein, dessen Beschleunigerkomponente das hochfeine Calciumhydroxid in einer mit einem anderen Stoff gemischten Form enthält. Bei dem anderen Stoff kann es sich etwa um CaO oder CaO₃ handeln

Unter Verwendung erfindungsgemäßer Bindemittel hergestellte Produkte gemäß Patentanspruch 21 umfassen Betonbauteile, insbesondere Betonfertigteile, die vorzugsweise den Anforderungen aus EN 206-1:2001-07 bzw. DIN 1045-2:2001-07 genügen.

Des weiteren sollen auch Verfahren zum Herstellen eines Baumaterials, bei dem das in Ansprüche 1 bis 20 beanspruchte hydraulische Bindemittel zugegeben wird, geschützt werden.

Schließlich wird auch die Verwendung eines hydraulischen Bindemittels nach einem der Ansprüche 1 bis 20 zur Herstellung von Mörtel und Beton, insbesondere von Betonbauteilen wie in Anspruch 25 bzw. Anspruch 21 beansprucht, unter Schutz gestellt.

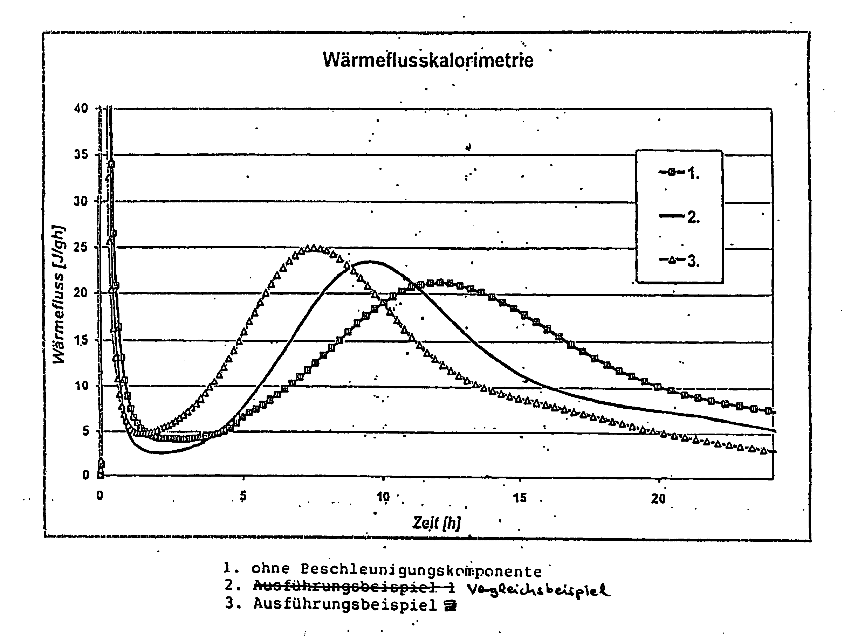

Die einzige Figur der Zeichnung zeigt eine Wärmeflusskalorimetrie von Beispielen hydraulischer Bindemittel
Vorteile des erfindungsgemäßen hochfeinen Calciumhydroxids als Beschleunigerkomponente sollen im Folgenden an einem Vergleichsbeispiel und einem Ausführungsbeispiel erläutert werden. Zur Verdeutlichung werden diese auch mit einer Variante verglichen, bei der lediglich eine Bindemittelkomponente, hier ein Portlandzement CEM I, 52,5 R, nachfolgend BMK genannt, verwendet wird. Im Vergleichsbeispiel wird eine Beschleunigerkomponente bestehend aus Calciumhydroxid mit einer spezifischen Oberfläche von 20 m²/g (BET) verwendet, wobei die Bindemittelkomponente ebenfalls aus einem Portlandzement, ebendiesem BMK besteht. Der Anteil des feinen Calciumhydroxids bezogen auf das hydraulische Bindemittel beträgt 5 %. Zur Herstellung des entsprechenden Betons werden 370 kg/m³ dieses Bindemittels, 148 kg/m³ Wasser, 1920 kg/m³ Gesteinskörnung verwendet sowie etwa 4 kg/m³ eines handelsüblichen Fließmittels zugegeben (sodass für den Beton ein Ausbreitmaß von etwa 50 cm erreicht wird). Dieser Beton erreicht nach 28 Tagen eine Druckfestigkeit von 74,5 N/mm² (siehe Tabelle 1), erfüllt also insbesondere die üblicherweise geforderte Druckfestigkeit und übertrifft sogar die Druckfestigkeit der Vergleichsvariante ohne Verwendung einer Beschleunigerkomponente. Anhand der Werte aus Tabelle 1 lässt sich auch ersehen, dass in diesem Vergleichsbeispiel nach 6 Stunden eine Frühfestigkeit von 10,7 N/mm² und nach 8 Stunden bereits eine Frühfestigkeit von 27 N/mm² erreicht wird. Diese im Vergleich zu der Variante ohne Beschleunigerkomponente erhöhten Werte ergeben sich aus einem entsprechend erhöhten chemischen Umsatz des Bindemittels während des Zeitintervalls von 5 bis 10 Stunden, wie aus der in der Zeichnung dargestellten Wärmeflusskalorimetrie ersichtlich ist. Ein relevanter Zielwert für die Frühfestigkeit des Betons sind 15 N/mm², da i.d.R. diese Druckfestigkeit ausreicht, um Betonbauteile, insbesondere Betonfertigteile, zu entschalen. Dieser Wert wird im Vergleichsbeispiel nach etwa 6½ Stunden erreicht.

Im Ausführungsbeispiel wird eine Beschleunigerkomponente aus Calciumhydroxid mit einer spezifischen Oberfläche von 43 m²/g verwendet, wobei es sich bei der Bindemittelkomponente wiederum um BMK Portlandzement handelt. Die Mengen- und Mischungsverhältnisse des hydraulischen Bindemittels mit Wasser, der Gesteinskörnung sowie dem Fließmittel sind wie im Vergleichsbeispiel gewählt. Auch hier wird mit einer 28-Tage-Festigkeit von 73,8 N/mm² eine ausreichende Endfestigkeit erreicht. Ein Vorteil dieser Beschleunigerkomponente auf der Basis eines Calciumhydroxides mit extrem hoher BET-Oberfläche (43 m²/g) ist, dass die im Anschluss an die Vermischung zu Beton einsetzende und durch einen vergleichsweise geringen chemischen Umsatz des Bindemittels gekennzeichnete Ruhephase, wie aus der Wärmeflusskalorimetrie aus der Zeichnung ersichtlich, noch stärker verkürzt ist. Die in Tabelle 1 aufgeführten sehr hohen Frühfestigkeiten des nach dem Ausführungsbeispiel hergestellten Betons von bereits 25,2 N/mm² nach nur 6 Stunden zeigen, dass in diesem Fall ein schnelles Entschalen und die Belastung eines Betonbauteils, insbesondere Betonfertigteils, bereits nach weniger als 6 Stunden möglich ist. Damit wird die Vollendung eines kompletten Betoniervorgangs innerhalb einer Arbeitsschicht (ca. 8 Stunden) ermöglicht, und zwar unter Normalbedingungen, d. h. ohne den Einsatz kostspieliger und aufwendiger Wärmebehandlungen. So wird insbesondere das Betonieren in Dreischichtarbeit unter Normalbedingungen möglich, was besonders vorteilhaft ist, wenn in kurzer Zeit eine große Anzahl von Betonbauteilen benötigt wird, und/oder damit die relativ teuren Schalungstypen schnell wieder in Umlauf kommen können.

**Tabelle1: Festigkeitsverlauf der in den Ausführungsbeispielen beschriebenen Betone**

| Beton | Zusatz | Druckfestigkeit nach .. Angaben in N/mm² | | | |
|---|---|---|---|---|---|
| | | 4h | 6h | 8h | 28d |
| 1. | ohne Beschleunigerkomponente | 0,0 | 3,5 | 19,3 | 73,1 |
| 2. | nach Vergleichsbeispiel | 2,6 | 10,7 | 27,0 | 74,5 |
| 3. | nach Ausführungsbeispiel | 5,1 | 25,2 | 39,0 | 73,8 |

Die Erfindung ist nicht auf die anhand der Zeichnung dargestellten Ausführungsformen beschränkt. Vielmehr ist auch an den Einsatz erfindungsgemäßer Bindemittel mit anderen Zusammensetzungen und zu verschiedenen Gebrauchszwecken gedacht.

## Patentansprüche

1. Hydraulisches Bindemittel, mit einer nach Wasserzugabe fließ- und erstarrungsfähigen Bindemittelkomponente und einer zum Beschleunigen des Erstarrens dienenden Beschleunigerkomponente,
**dadurch gekennzeichnet, daß** die Beschleunigerkomponente hochfeines Calciumhydroxid mit einer spezifischen Oberfläche (BET-Oberfläche nach DIN 66132) von 25 m²/g oder mehr enthält.

2. Hydraulisches Bindemittel nach Anspruch 1, **dadurch gekennzeichnet, daß** das hochfeine Calciumhydroxid zu 40 Masse-% oder mehr, insbesondere 70-% Masse oder mehr, aus Teilchen mit einer Korngröße von 20 µm oder weniger besteht.

3. Hydraulisches Bindemittel nach Anspruch 1 oder 2, **dadurch gekennzeichnet, daß** das hochfeine Calciumhydroxid eine spezifische Oberfläche von 30 m²/g oder mehr aufweist.

4. Hydraulisches Bindemittel nach einem der vorhergehenden Ansprüche, **dadurch gekennzeichnet, daß** das hochfeine Calciumhydroxid eine spezifische Oberfläche von 100 m²/g oder weniger, vorzugsweise 75 m²/g oder weniger, insbesondere 50 m²/g oder weniger aufweist

5. Hydraulisches Bindemittel nach einem der vorhergehenden Ansprüche, **dadurch gekennzeichnet, daß** das hochfeine Calciumhydroxid zu 40 Masse-% oder mehr aus Teilchen mit einer Korngröße von 10 µm oder weniger, vorzugsweise 5 µm oder weniger und/oder zu 70 Masse-% oder mehr aus Teilchen mit einer Korngröße von 16 µm oder weniger, vorzugsweise 12 µm oder weniger besteht.

6. Hydraulisches Bindemittel nach einem der vorhergehenden Ansprüche, **dadurch gekennzeichnet, daß** das hochfeine Calciumhydroxid zu 40 Masse-% oder mehr aus Teilchen mit einer Korngröße von 1 µm oder mehr, vorzugsweise 3 µm oder größer und/oder zu 70 Masse-% oder mehr aus Teilchen mit einer Korngröße von 4 µm oder mehr, vorzugsweise 8 µm oder mehr besteht.

7. Hydraulisches Bindemittel nach einem der vorhergehenden Ansprüche, **dadurch gekennzeichnet, daß** es die Beschleunigungskomponenten in einer Menge von 1 Masse-% oder mehr, vorzugsweise 3 Masse-% oder mehr, insbesondere 4 Masse-% oder mehr enthält.

8. Hydraulisches Bindemittel nach einem der vorhergehenden Ansprüche, **dadurch gekennzeichnet, daß** es die Beschleunigerkomponente in einer Menge von 15 Masse-% oder weniger, vorzugsweise 10 Masse-% oder weniger, insbesondere 6 Masse-% oder weniger enthält.

9. Hydraulisches Bindemittel nach einem der vorhergehenden Ansprüche, **dadurch gekennzeichnet, daß** die Beschleunigungskomponente in trockener, pulvriger Form enthalten ist.

10. Hydraulisches Bindemittel nach einem der vorhergehenden Ansprüche, **dadurch gekennzeichnet, daß** die Bindemittelkomponente Portlandzement CEM I (nach DIN EN 197) und/oder Kompositzement CEM II (nach DIN EN 197) enthält, oder vorzugsweise daraus besteht.

11. Hydraulisches Bindemittel nach einem der vorhergehenden Ansprüche, **dadurch gekennzeichnet, daß** die Mahlfeinheit der Bindemittelkomponente 3000 cm²/g (nach Blaine) oder mehr, vorzugsweise 4000 cm²/g oder mehr beträgt.

12. Hydraulisches Bindemittel nach einem der vorhergehenden Ansprüche, **dadurch gekennzeichnet, daß** die Mahlfeinheit der Bindemittelkomponente 7000 cm²/g (nach Blaine) oder weniger, vorzugsweise 6000 cm²/g oder weniger beträgt.

13. Hydraulisches Bindemittel nach Anspruch 10, **dadurch gekennzeichnet, daß** dessen C₃S-Anteil - bezogen auf den Zementklinkeranteil (Portlandzement und/oder Kompositzement) - 50 Masse-% oder mehr, vorzugsweise 55 Masse-% oder mehr beträgt.

14. Hydraulisches Bindemittel nach einem der Ansprüche 10 oder 13, **dadurch gekennzeichnet, daß** dessen C₃S-Anteil - bezogen auf den Zementklinkeranteil (Portlandzement und/oder Kompositzement) 75 Masse-% (bezogen auf die Bindemittelkomponente) oder weniger, vorzugsweise 65 Masse-% oder weniger beträgt.

15. Hydraulisches Bindemittel nach einem der vorhergehenden Ansprüche, **dadurch gekennzeichnet, daß** dessen Alkaligehalt, ausgedrückt als Natriumäquivalent, 1,8-Masse % (bezogen auf die Bindemittelkomponente) oder weniger, vorzugsweise 1,2 Masse% oder weniger beträgt.

16. Hydraulisches Bindemittel nach einem der vorhergehenden Ansprüche, **dadurch gekennzeichnet, daß** es sich bei der Bindemittelkomponente um einen Zement der Festigkeitsklasse 52,5 R handelt.

17. Hydraulisches Bindemittel nach einem der vorhergehenden Ansprüche, **dadurch gekennzeichnet, daß** es die Bindemittelkomponente in einer Menge von 85 Masse-% oder mehr, vorzugsweise 90 Masse-% oder mehr, insbesondere 94 Masse-% oder mehr, jeweils bezogen auf die Gesamtmenge des Bindemittels enthält.

18. Hydraulisches Bindemittel nach einem der vorhergehenden Ansprüche, **dadurch gekennzeichnet, daß** es die Bindemittelkomponente in einer Menge von 99 Masse-% oder weniger, vorzugsweise 97 Masse% oder weniger, insbesondere 96 Masse-% oder weniger, jeweils bezogen auf die Gesamtmenge des Bindemittels enthält.

19. Hydraulisches Bindemittel nach einem der vorhergehenden Ansprüche, **dadurch gekennzeichnet, daß** eine oder mehrere seiner Bestandteile, insbesondere das hochfeine Calciumhydroxid, mit einer Beschichtung versehen ist/sind.

20. Hydraulisches Bindemittel nach einem der vorhergehenden Ansprüche, **dadurch gekennzeichnet, daß** die Beschleunigerkomponente das hochfeine Calciumhydroxid in einer mit einem anderen Stoff gemischten Form enthält.

21. Transportbeton oder Betonbauteil wie eine Fahrbahndecke, ein Betonpfahl oder ein Fundament, insbesondere Betonfertigteil, vorzugsweise gemäß den Anforderungen aus EN 206-1:2007-07 bzw. DIN 1045-2:2001-07, hergestellt unter Verwendung eines hydraulischen Bindemittels nach einem der vorhergehenden Ansprüche.

22. Verfahren zum Herstellen und Bereitstellen eines fließ- und erstarrungsfähigen Baumaterials, bei dem in einem ersten Schritt Ausgangsstoffe, wie etwa ein Basisstoff, mindestens ein Zuschlagsstoff, eine Basisflüssigkeit und/oder mindestens ein Zusatzstoff einer Mischvorrichtung, insbesondere in einem vorgegebenen Mischungsverhältnis, zugeführt werden, diese Mischkomponenten in einem zweiten Schritt von und/oder in der Mischvorrichtung intensiv und homogen zu einem fließ- und erstarrungsfähigen Baumaterial gemischt werden und dieses fließ- und erstarrungsfähige Baumaterial in einem dritten Schritt in einem Behälter bereitgestellt wird und/oder in eine vorbestimmte Form oder auf eine vorbestimmte Fläche gegossen, gespritzt oder geschüttet wird, **dadurch gekennzeichnet, daß** in Schritt 1 ein hydraulisches Bindemittel nach einem der Ansprüche 1 bis 18 enthaltender Basisstoff zugegeben wird.

23. Verfahren nach Anspruch 22, **dadurch gekennzeichnet, daß** im ersten Schritt als Zuschlagstoff Feinsand und/oder Sand und/oder Kies und als Basisflüssigkeit Wasser zugegeben wird und im zweiten Schritt die Mischkomponenten zu einem (Frisch) Mörtel oder (Frisch) Beton gemischt werden.

24. Verfahren nach Anspruch 22 oder 23, **dadurch gekennzeichnet, daß** im ersten Schritt als Zusatzstoff ein Fließmittel zugegeben wird und im zweiten Schritt die Mischkomponenten zu einem (Fließ) Mörtel oder (Fließ) Beton gemischt werden.

25. Verfahren nach einem der Ansprüche 22 bis 24, **dadurch gekennzeichnet, daß** im dritten Schritt das fließ- und erstarrungsfähige Baumaterial in einen Schalungstyp für Betonbauteile, insbesondere Betonfertigteile oder auf eine Fahrbahndecke, eine präparierte Erdreichfläche, eine Gebäudewand, -decke oder einem Gebäudeboden gegossen, gespritzt oder geschüttet wird.

26. Verwendung eines hydraulischen Bindemittels nach einem der Ansprüche 1 bis 20 zur Herstellung von Mörtel, insbesondere Reparaturmörtel, oder Beton, insbesondere Transportbeton, oder eines Betonbauteils nach Anspruch 21.

## Claims

1. A hydraulic binder with a binder component which is capable of flowing and solidifying after water has been added and an accelerator component serving to accelerate solidification,
**characterised in that** the accelerator component contains very fine calcium hydroxide with a specific surface area (BET surface area according to DIN 66132) of 25 m²/g or more.

2. The hydraulic binder according to Claim 1, **characterised in that** the very fine calcium hydroxide comprises 40 % by mass or more, in particular 70 % by mass or more, particles with a grain size of 20 µm or less.

3. The hydraulic binder according to Claim 1 or 2, **characterised in that** the very fine calcium hydroxide has a specific surface area of 30 m²/g or more.

4. The hydraulic binder according to any of the preceding claims, **characterised in that** the very fine calcium hydroxide has a specific surface area of 100 m²/g or less, preferably 75 m²/g or less, in particular 50 m²/g or less.

5. The hydraulic binder according to any of the preceding claims, **characterised in that** the very fine calcium hydroxide comprises 40 % by mass or more particles with a grain size of 10 µm or less, preferably 5 µm or less and/or 70 % by mass or more particles with a grain size of 16 µm or less, preferably 12 µm or less.

6. The hydraulic binder according to any of the preceding claims, **characterised in that** the very fine calcium hydroxide comprises 40 % by mass or more particles with a grain size of 1 µm or more, preferably 3 µm or larger and/or 70 % by mass or more particles with a grain size of 4 µm or more, preferably 8 µm or more.

7. The hydraulic binder according to any of the preceding claims, **characterised in that** it contains the acceleration components in a quantity of 1 % by mass or more, preferably 3 % by mass or more, in particular 4 % by mass or more.

8. The hydraulic binder according to any of the preceding claims, **characterised in that** it comprises the acceleration component in a quantity of 15 % by mass or less, preferably 10 % by mass or less, in particular 6 % by mass or less.

9. The hydraulic binder according to any of the preceding claims, **characterised in that** the acceleration component is contained in a dry, powdery form.

10. The hydraulic binder according to any of the preceding claims, **characterised in that** the binder component contains Portland cement CEM 1 (according to DIN EN 197) and/or composite cement CEM II (according to DIN EN 197), or is preferably made up of the latter.

11. The hydraulic binder according to any of the preceding claims, **characterised in that** the grinding fineness of the binder component is 3000 cm²/g (according to Blaine) or more, preferably 4000 cm²/g or more.

12. The hydraulic binder according to any of the preceding claims, **characterised in that** the grinding fineness of the binder component is 7000 cm²/g (according to Blaine) or less, preferably 6000 cm²/g or less.

13. The hydraulic binder according to Claim 10, **characterised in that** the C₃S portion of the latter - in relation to the cement clinker portion (Portland cement and/or composite cement) - is 50 % by mass or more, preferably 55 % by mass or more.

14. The hydraulic binder according to either of Claims 10 or 13, **characterised in that** the C₃S portion of the latter - in relation to the cement clinker portion (Portland cement and/or composite cement) - is 75 % by mass (in relation to the binder component) or less, preferably 65 % by mass or less.

15. The hydraulic binder according to any of the preceding claims, **characterised in that** the alkaline strength of the latter, expressed as the sodium equivalent, is 1.8 % by mass (in relation to the binder component) or less, preferably 1.2 % by mass or less.

16. The hydraulic binder according to any of the preceding claims, **characterised in that** the binder component is a cement of strength category 52.5 R.

17. The hydraulic binder according to any of the preceding claims, **characterised in that** it contains the binder component in a quantity of 85 % by mass or more, preferably 90 % by mass or more, in particular 94 % by mass or more, respectively in relation to the overall quantity of the binder.

18. The hydraulic binder according to any of the preceding claims, **characterised in that** it contains the binder component in a quantity of 99 % by mass or less, preferably 97 % by mass or less, in particular 96 % by mass or less, respectively in relation to the overall quantity of the binder.

19. The hydraulic binder according to any of the preceding claims, **characterised in that** one or more of its components, in particular the very fine calcium hydroxide, is/are provided with a coating.

20. The hydraulic binder according to any of the preceding claims, **characterised in that** the accelerator component contains the very fine calcium hydroxide in a form mixed with another material.

21. A ready-mixed concrete or a concrete component such as a roadway covering, a concrete pile or a foundation, in particular a precast concrete element, preferably in accordance with the requirements of EN 206-1:2007-07 and DIN 1045-2:2001-07, produced using a hydraulic binder according to any of the preceding claims.

22. A method for producing and preparing a construction material capable of flowing and solidifying wherein, in a first step, raw materials such as, for example, a base material, at least one aggregate, a base liquid and/or at least one additive are conveyed to a mixing apparatus, in particular in a pre-specified mix ratio, in a second step these mix components are mixed intensively and homogeneously by and/or in the mixing apparatus to form a construction material capable of flowing and solidifying, and in a third step this construction material capable of flowing and solidifying is prepared in a container and/or cast, injected or poured into a pre-specified mould or onto a pre-specified surface, **characterised in that** in step 1 a base material containing hydraulic binder according to any of Claims 1 to 18 is added.

23. The method according to Claim 22, **characterised in that** in the first step fine sand and/or sand and/or grit is added as an aggregate and water is added as a base liquid, and in the second step the mix components are mixed to form a (fresh) mortar or (fresh) concrete.

24. The method according to Claim 22 or 23, **characterised in that** in the first step a fluxing agent is added as an additive, and in the second step the mix components are mixed to form a (flowing) mortar or a (flowing) concrete.

25. The method according to any of Claims 22 to 24, **characterised in that** in the third step the construction material capable of flowing and solidifying is cast, injected or poured into a type of casing for concrete components, in particular precast concrete elements or onto a roadway covering, a prepared ground surface, a building wall, ceiling or a building floor.

26. The use of a hydraulic binder according to any of Claims 1 to 20 in order to produce mortar, in particular repairing mortar or concrete, in particular ready-mixed concrete, or a concrete component according to Claim 21.

## Revendications

1. Liant hydraulique contenant un constituant liant apte à s'écouler après humidification et à se solidifier et un constituant accélérateur servant à accélérer la solidification,
**caractérisé en ce que** le constituant accélérateur contient de l'hydroxyde de calcium extrafin présentant une surface spécifique (surface BET selon DIN 66132) d'au moins 25 m²/g.

2. Liant hydraulique selon la revendication 1, **caractérisé en ce que** l'hydroxyde de calcium extrafin est constitué, à raison d'au moins 40 % en masse, notamment au moins 70 % en masse, de particules dont la taille de grain est au maximum de 20 µm.

3. Liant hydraulique selon la revendication 1 ou 2, **caractérisé en ce que** l'hydroxyde de calcium extrafin présente une surface spécifique d'au moins 30 m²/g.

4. Liant hydraulique selon l'une des revendications précédentes, **caractérisé en ce que** l'hydroxyde de calcium extrafin présente une surface spécifique de 100 m²/g ou moins, de préférence de 75 m²/g ou moins, notamment de 50 m²/g ou moins.

5. Liant hydraulique selon l'une des revendications précédentes, **caractérisé en ce que** l'hydroxyde de calcium extrafin est constitué, à raison d'au moins 40 % en masse, de particules dont la taille de grain est au maximum de 10 µm et de préférence au maximum de 5 µm et/ou est constitué à raison d'au moins 70 % en masse de particules dont la taille de grain est au maximum de 16 µm, de préférence au maximum de 12 µm.

6. Liant hydraulique selon l'une des revendications précédentes, **caractérisé en ce que** l'hydroxyde de calcium extrafin est constitué, à raison d'au moins 40 % en masse, de particules dont la taille de grain est au minimum de 1 µm, de préférence de 3 µm ou supérieure et/ou est constitué à raison d'au moins 70 % en masse de particules dont la taille de grain est au moins de 4 µm, de préférence au moins 8 µm.

7. Liant hydraulique selon l'une des revendications précédentes, **caractérisé en ce qu'**il contient le constituant accélérateur à raison de 1 % en masse ou plus, de préférence de 3 % en masse ou plus, notamment de 4 % en masse ou plus.

8. Liant hydraulique selon l'une des revendications précédentes, **caractérisé en ce qu'**il contient le constituant accélérateur à raison de 15 % en masse ou moins, de préférence de 10 % en masse ou moins, notamment de 6 % en masse ou moins.

9. Liant hydraulique selon l'une des revendications précédentes, **caractérisé en ce que** le constituant accélérateur est contenu sous une forme sèche et pulvérulente.

10. Liant hydraulique selon l'une des revendications précédentes, **caractérisé en ce que** le constituant liant contient du ciment Portland CEM 1 (selon DIN EN 197) et/ou du ciment composé CEM II (selon DIN EN 197), ou en est de préférence constitué.

11. Liant hydraulique selon l'une des revendications précédentes, **caractérisé en ce que** la finesse du constituant liant est au moins de 3000 cm²/g (selon Blaine), de préférence au moins 4000 cm²/g.

12. Liant hydraulique selon l'une des revendications précédentes, **caractérisé en ce que** la finesse du constituant liant est au maximum de 7000 cm²/g (selon Blaine), de préférence au maximum 6000 cm²/g.

13. Liant hydraulique selon la revendication 10, **caractérisé en ce que** sa teneur en C₃S, sur la base de la teneur en scorie de ciment (ciment Portland et/ou composé), est au moins de 50 % en masse, de préférence au moins 55 % en masse.

14. Liant hydraulique selon l'une des revendications 10 ou 13, **caractérisé en ce que** sa teneur en C₃S, sur la base de la teneur en scorie de ciment (ciment Portland et/ou composé) est au maximum de 75 % en masse (sur la base du constituant liant), de préférence au maximum de 65 % en masse.

15. Liant hydraulique selon l'une des revendications précédentes, **caractérisé en ce que** sa teneur en alcali, exprimée en équivalent de sodium, est au maximum de 1,8 % en masse (sur la base du constituant liant), de préférence au maximum de 1,2 % en masse.

16. Liant hydraulique selon l'une des revendications précédentes, **caractérisé en ce que** le constituant liant est un ciment de classe de résistance 52,5 R.

17. Liant hydraulique selon l'une des revendications précédentes, **caractérisé en ce qu'**il contient le constituant liant à raison d'au moins 85 % en masse, de préférence 90 % en masse ou plus, notamment de 94 % en masse ou plus, sur la base respective de la quantité totale de liant.

18. Liant hydraulique selon l'une des revendications précédentes, **caractérisé en ce qu'**il contient le constituant liant à raison de 99 % en masse ou moins, de préférence 97 % en masse ou moins, notamment 96 % en masse ou moins, sur la base respective de la quantité totale de liant.

19. Liant hydraulique selon l'une des revendications précédentes, **caractérisé en ce qu'**un ou plusieurs de ses constituants, notamment l'hydroxyde de calcium extrafin, est/sont pourvu(s) d'un revêtement.

20. Liant hydraulique selon l'une des revendications précédentes, **caractérisé en ce que** le constituant accélérateur contient de l'hydroxyde de calcium extrafin sous une forme mélangée à une autre substance.

21. Béton prêt à l'emploi ou élément de construction en béton tel que revêtement routier, pieu en béton ou fondation, notamment élément en béton préfabriqué, de préférence selon les exigences des normes EN 206-1:2007-07 ou DIN 1045-2:2001-07, produit à l'aide d'un liant hydraulique selon l'une des revendications précédentes.

22. Procédé de production et de mise à disposition d'un matériau de construction apte à s'écouler et à se solidifier dans lequel, au cours d'une première étape, des matières de départ, telles que par exemple une substance de base, au moins un agrégat, un liquide de base et/ou au moins un additif sont introduits dans un dispositif mélangeur, notamment dans un rapport de mélange prédéfini, au cours d'une deuxième étape ces constituants du mélange sont mélangés par et/ou dans le dispositif mélangeur de façon intensive et homogène pour produire un matériau de construction apte à s'écouler et à se solidifier et, au cours d'une troisième étape, ce matériau de construction apte à s'écouler et à se solidifier est placé dans un conteneur et/ou est coulé, projeté ou déversé dans un moule prédéterminé ou sur une surface prédéterminée, **caractérisé en ce que**, dans la première étape, on introduit une substance de base contenant un liant hydraulique selon l'une des revendications 1 à 17.

23. Procédé selon la revendication 22, **caractérisé en ce que** l'agrégat introduit dans la première étape consiste en du sable fin et/ou du sable et/ou du gravier et le liquide de base consiste en de l'eau et **en ce que**, dans la deuxième étape, les constituants du mélange sont mélangés pour produire du mortier (frais) ou du béton (frais).

24. Procédé selon la revendication 22 ou 23, **caractérisé en ce que** l'additif introduit dans la première étape consiste en un fluidifiant et **en ce que**, dans la deuxième étape, les constituants du mélange sont mélangés pour produire du mortier (fluide) ou du béton (fluide).

25. Procédé selon l'une des revendications 22 à 24, **caractérisé en ce que**, dans la troisième étape, le matériau de construction apte à s'écouler et à se solidifier est coulé, projeté ou déversé dans un type de coffrage pour éléments de construction en béton, notamment pour éléments en béton préfabriqués, ou sur un revêtement routier, sur une surface de terrain préparée, un mur, un plafond ou un sol de bâtiment.

26. Utilisation d'un liant hydraulique selon l'une des revendications 1 à 20 pour la préparation de mortier, notamment de mortier de réparation, ou de béton, notamment de béton prêt à l'emploi, ou d'un élément de construction en béton selon la revendication 21.
